# EUROPÄISCHE PATENTSCHRIFT

(11) **EP 1 627 702 B1**
(45) Veröffentlichungstag und Bekanntmachung des Hinweises auf die Patenterteilung: **10.02.2010**
(21) Anmeldenummer: 05017204.8
(22) Anmeldetag: 08.08.2005
(51) Int. Cl.: B23B 47/28, E05D 11/00, B25B 13/46, B25B 23/00

(54) **Bearbeitungsset für Profilsysteme mit Schablone**
Working kit for systems of profiles with template
Kit de travail pour systèmes de profilés avec gabarit

(30) Priorität: 16.08.2004 CH 13482004
(43) Veröffentlichungstag der Anmeldung: 22.02.2006
(73) Patentinhaber: Hasler, Josef, 9452 Hinterforst (CH)
(72) Erfinder: Hasler, Josef, 9452 Hinterforst (CH)
(74) Vertreter: Kaminski, Susanne

(56) Entgegenhaltungen:
- EP-A- 0 413 203
- CH-A- 540 735
- DE-A1- 2 358 028
- DE-A1- 2 461 537
- DE-U1- 9 000 618
- DE-U1- 9 010 314
- DE-U1- 20 014 075
- DE-U1- 20 212 156
- FR-A- 2 498 750
- GB-A- 2 193 135
- US-A- 1 630 429
- US-A- 4 611 514
- US-A- 5 743 684
- US-A1- 2003 079 570
- US-B1- 6 363 820
- US-B1- 6 752 046
- SCHEPER D: "SJABLOON MAAKT AFHANGEN EENVOUDIGER" BOUWWERELD, MISSET. DOETINCHEM, NL, Bd. 86, Nr. 13, 29. Juni 1990 (1990-06-29), Seiten 24-25, XP000162286 ISSN: 0026-5942

## Beschreibung

Die Erfindung bezieht sich auf ein Bearbeitungsset für Profilsysteme mit einer Schablone, gemäß dem Oberbegriff des Anspruchs 1, aus denen beispielsweise zumindest Teile von Rahmen, Türen und Fenstern gebildet sind. Eine solche Schablone ist aus der DE 200 14 075 U1 bekannt.

Für die Montage von Bändern an Rahmen- und Flügelprofilen werden Bohrlehren zum positionsgenauen Bohren von Befestigungslöchern verwendet. Die feststehenden Profilteile gehören zum Rahmen. Die bewegbaren Türen und Fenstern werden als Flügel bezeichnet. Die Bänder bilden die Verbindungen zwischen den festen und den bewegten Profilteilen. Nach dem Bohren der Befestigungslöcher müssen die Befestigungsbereiche der Bänder mit Schrauben an den Profilteilen befestigt werden. Auch bei einer genauen Befestigung ist es gegebenenfalls nötig, dass die exakte Lage des Flügels relativ zum Rahmen mittels Verstellen einer Einstellvorrichtung korrigiert werden kann. Wenn Bänder im Innern der Profile angeordnet werden, so müssen gegebenenfalls Einstell- und Befestigungsschritte, bzw. Schraubbewegungen durch enge Öffnungen im Profil durchgeführt werden.

Aus der DE 200 14 075 U1 ist eine Bohrlehre bekannt, welche über Klemmschrauben an einer Führungsstange fixiert wird. Diese Fixierung dient zur Einstellung der Lage in Profil-Längsrichtung relativ zu einem Anschlag der Führungsstange 12. Um beim Bohren ein Abheben der Bohrlehre zu verhindern, wird die Bohrlehre mittels Schraubzwingen an das Hohlprofil gedrückt. Um eine Positionierung quer zur Profil-Längsrichtung zu ermöglichen, schmiegt sich die Bohrlehre an vom Profil vorstehende Stege an, was nur bei Profilen mit vorstehenden Stegen möglich ist. Zudem kann die Aufnahme für die Stege in der Bohrlehre nicht spielfrei gemacht werden, weil sonst das Aufsetzen, Verschieben in Längsrichtung und Abnehmen der Bohrlehre erschwert würde. Aufgrund des nötigen Spiels ist die Positionierung quer zur Längsrichtung nicht sehr genau.

Bei den Isolierprofilen mit einer isolierenden, stegförmigen Verbindung zwischen metallischen Innen- und Aussenprofilen gemäss der DE 200 14 075 U1 ist der Abstand zwischen den Innen- und Aussenprofilen nicht immer exakt gleich gross, weil beim Einsetzen der stegförmigen Verbindungen mit grossen Toleranzen gerechnet werden muss. Entsprechend müssen die Aufnahmevertiefungen der Bohrlehre für die Profilstege beidseits der isolierenden Verbindung je ein genügend grosses Spiel umfassen. Dadurch kann mit dem Aufsetzen der Bohrlehre auf die vorstehenden Profilstege kein exaktes Positionieren quer zur Längsrichtung gewährleistet werden.

Die Nachteile der Lösung gemäss der DE 200 14 075 U1 bestehen darin, dass ein exaktes Positionieren quer zur Längsrichtung nicht immer gewährleistet ist und dass die Handhabung durch das Festschrauben an der Führungsstange und das Befestigen mittels Schraubzwingen aufwendig ist.

Aus der CH 497 228 ist eine weitere Lösung bekannt, bei der die Bohrlehre mittels Klemmbügeln in der Form von Schraubzwingen am Profil befestigt wird. Die Bohrlehre ist mit den Klemmbügeln verbunden und wird somit nicht von diesen an das Profil gedrückt. Die Klemmbügel müssen das Profil beidseits der Profilfläche, an der die Bohrungen angebracht werden, umgreifen. Die Positionierung quer zur Profil-Längsrichtung erfolgt über einen Anschlag der Klemmbügel und somit von einer Profilseite her. Ein Nachteil dieser Lösung besteht darin, dass drei Profilseiten zugänglich sein müssen, was bei engen Platzverhältnissen nicht immer möglich ist. Weil die Querpositionierung von einer Seite her erfolgt, besteht zudem die Gefahr, dass die Klemmbügel von der falschen Seite her montiert werden und entsprechend der Anschlag auf der falschen Profilseite anliegt.

Nebst dem Anbringen von Befestigungslöchern kann mit der Bohrlehre auch ein Bereich bezeichnet oder bearbeitet werden, in dem das Profil mit einer Öffnung zum Einsetzen eines Bandes versehen werden muss. Bei eingesetzten Bändern müssen Einstell- und Befestigungsschritte, bzw. Schraubbewegungen durch die enge Öffnungen im Profil durchgeführt werden. In Profil-Querrichtung kann die Öffnung maximal der Mächtigkeit des Profils entsprechen. Wenn nun ein Schraubwerkzeug durch die Öffnung auf eine Mutter aufgesetzt bzw. in eine Eingriffsöffnung eingesetzt werden muss, so kann es sein, dass der Eingriff im durch die Öffnung beschränkten Schwenkbereich des Schlüssels nicht möglich ist. Bei Schraubwerkzeugen mit Rätschen kann es sein, dass der Schwenkbereich des Werkzeuges durch die Öffnung so stark eingeschränkt wird, dass die Rätsche zwischen den beiden Schwenkendlagen des Werkzeuges nicht immer zwei Einrastpositionen aufweist und somit das Schrauben verunmöglicht wird.

Aus der EP 949 045 A2 ist ein aus Teilen zusammengesetzter Schraubenschlüssel für schlecht zugängliche Verschraubungsstellen bekannt. Im Innern des Hohlprofils ist das Arbeiten mit dem zusammengesetzten Schlüssel und der beschriebenen Rätsche nicht zweckmässig. Aufgrund der sperrigen Teile und der zum Einrasten der Rätsche nötigen Bewegungen kann durch eine Öffnung im Profil nicht mit Sicherheit eine für das Festschrauben oder Lösen genügend grosse Drehbewegung ermöglicht werden.

Aus der DE 100 03 348 A1 und der DE 197 30 300 sind Schraubwerkzeuge mit Klemmrollen-Freilaufanordnungen bekannt. Bei Klemmrollen-Freiläufen kann die Bewegung bis zum Eingreifen kleiner sein als bei Rätschenfreiläufen mit einrastenden Zähnen. Das schnelle Eingreifen wird dadurch erzielt, dass Klemmrollen zwischen einer inneren und einer äusseren Hülse angeordnet sind, wobei eine dieser Hülsen Rampen aufweist. Bei einer Relativ-Drehbewegung zwischen den beiden Hülsen sind die Klemmrollen in einer ersten Drehrichtung nur mit einer Hülse in Kontakt. In einer zweiten Drehrichtung gelangen die Klemmrollen auf den Rampen nach einer äusserst kurzen Drehbewegung in klemmenden Kontakt zu beiden Hülsen, wodurch die eine Hülse die andere mitdreht. Zum richtigen Positionieren der Klemmrollen bei den Rampen wird eine Käfighülse zwischen der inneren und der äusseren Hülse angeordnet.

Gemäss der DE 100 03 348 A1 werden zwei Klemmrollen-Freiläufe so in einem Schraubwerkzeug angeordnet, dass durch die Verschiebung einer Kupplungsmuffe in den beiden inneren Hülsen, die eine, die andere oder beide inneren Hülsen formschlüssig mit der Kupplungsmuffe verbunden sind. Dadurch kann entsprechend der jeweiligen Lage der Kupplungsmuffe ein Freilauf in der einen oder in der anderen sowie eine feste Verbindung erzielt werden. Das Schraubwerkzeug ist im Wesentlichen in der Form eines Schraubenziehers ausgeformt, wobei die Freilaufvorrichtung im Griff aufgenommen ist. Schraubenzieherförmige Schraubwerkzeuge sind nicht geeignet für das Drehen von Schrauben, die sich im Inneren von Profilen in Profillängsrichtung erstrecken.

Gemäss der DE 197 30 300 kann am einen Ende eines Griffs eine Freilaufvorrichtung eingesetzt werden, so dass die Achse der Freilaufvorrichtung senkrecht zur Griffachse verläuft. Nach dem Aufstecken eines Schraubwerkzeuges auf die Freilaufvorrichtung kann das Werkzeug beispielsweise durch eine Öffnung in das Innere eines Profils eingeführt werden, so dass der Griff aus dem Profil seitlich heraus steht. Um die Freilaufrichtung wechseln zu können, muss die Freilaufvorrichtung zwei entgegengesetzt gerichtete Freiläufe und eine Umschalteinrichtung umfassen oder die Freilaufvorrichtung muss am Griff in zwei verschiedenen Ausrichtungen eingesetzt werden können. Nebst der Wahl der Freilaufrichtung muss auch das richtige Eingriffsteil an der Freilaufvorrichtung angeordnet werden können. Das Werkzeug muss also mindestens drei Teile - den Griff, die Freilaufvorrichtung und das gewünschte Eingriffsteil - umfassen. Wenn beispielsweise mindestens zwei verschiedene Inbusschlüssel verwendet werden, so würde das Werkzeugset bereits mindestens vier Teile - den Griff, die Freilaufvorrichtung und zwei Inbusschlüssel, sowie gegebenenfalls ein Zwischenstück, zwischen der Freilaufvorrichtung und dem Inbusschlüssel - umfassen.

Der Erfindung liegt nun die Aufgabe zugrunde, ein Bearbeitungsset für Profilsysteme zu finden, das mit möglichst wenig Teilen eine exakte Montage und Einstellung von Bändern an Profilteilen ermöglicht, auch wenn die Verhältnisse um die Profilteile und zum Eingriff in die Profilteile sehr beschränkt sind.

Diese Aufgabe wird durch die Merkmale des unabhängigen Anspruchs 1 gelöst. Die abhängigen Ansprüche beschreiben alternative bzw. vorteilhafte Ausführungsvarianten.

Bei der Lösung der Aufgabe wurde erkannt, dass beim Befestigen einer Bohrlehre an einem Profil mit isolierenden, stegförmigen Verbindung zwischen einem metallischen Innen- und einem metallischen Aussenprofil auf Halteteile bzw. Klemmbügel, die das Profil seitlich umgreifen, verzichtet werden kann. Beim Anschluss der stegförmigen Verbindung an das Innen- und an das Aussenprofil ergeben sich Eingriffsmöglichkeiten für Halteteile der Bohrlehre. Weil die isolierende, stegförmige Verbindung in das Innere des metallischen Innen- und des Aussenprofils geführt und dort befestigt ist, stehen beide metallischen Profile in den Kontaktbereichen zur isolierenden, stegförmigen Verbindung etwas über diese Verbindung vor.

Wenn nun eine Klemmscheibe mit einer ellipsenähnlichen Aussenberandung in einer ersten Drehausrichtung zwischen den beiden metallischen Profilen auf die isolierende Verbindung aufgelegt wird, so kann diese nach einer Drehung zwischen die isolierende Verbindung und je ein metallisches Profil eingreifen. Die Klemmlage wird in einer zweiten Drehausrichtung erreicht. Unabhängig vom jeweiligen Abstand zwischen dem Innen- und dem Aussenprofil, der innerhalb einer Toleranz variiert, ist die Achse der Klemmscheibe in der Klemmlage genau zentriert zwischen dem Innen- und dem Aussenprofil. Weil sich der dünne äussere Randbereich der Klemmscheibe etwas unter den über die isolierende Verbindung vorstehenden Rand des Innen- und des Aussenprofils schiebt, hält die Klemmscheibe eine mit der Klemmscheibe verbundene Bohrlehre am Profil fest.

Auf ein Umgreifen des Profils mit Klemmbügeln kann somit verzichtet werden. Daher kann die erfindungsgemässe Bohrlehre auch bei äusserst engen Montageverhältnissen eingesetzt werden. Durch die mit dem Festklemmen einhergehende Zentrierung, wird auch quer zur Profillängsrichtung ein exaktes Positionieren gewährleistet. Mit zwei drehbaren Klemmscheiben kann eine Bohrlehre exakt am Profil befestigt werden. Dabei müssen lediglich die beiden Klemmscheiben um maximal 90° in die Eingriffslage gedreht werden. Vor dem Festklemmen kann die Bohrlehre entlang des Profils in die gewünschte Längsposition gebracht werden.

Wenn die Löcher der Bohrlehre bezüglich einer durch die Drehachsen der Klemmscheiben führenden Spiegelachse symmetrisch angeordnet sind, so kann die Bohrlehre in beiden möglichen Richtungen auf das Profil aufgesetzt werden und die Löcher sind bezüglich einer Mittelachse zwischen dem Innen- und dem Aussenprofil immer gleich beabstandet. Bei der Ausrichtung an einer seitlichen Anschlagsfläche des Profils wäre dies nur der Fall, wenn das gesamte Profil bezüglich der erwähnten Mittelachse exakt symmetrisch wäre, was aufgrund der Toleranzen nicht der Fall ist.

Bei der Lösung der Aufgabe wurde zudem erkannt, dass eine Schraubvorrichtung vorzugsweise einen Griff und eine daran befestigte Freilaufvorrichtung umfassen soll, wobei die Achse der Freilaufvorrichtung im Wesentlichen senkrecht zur Griffachse verläuft und die Freilaufvorrichtung eine Durchtrittsöffnung zur Aufnahme eines Eingriffsteiles bzw. Schraubwerkzeuges umfasst. Nach dem Einstecken des Schraubwerkzeuges in die Freilaufvorrichtung kann das Werkzeug beispielsweise durch eine Öffnung in das Innere eines Profils eingeführt werden, so dass der Griff aus dem Profil seitlich heraus steht.

Die Freilaufvorrichtung ist vorzugsweise ein Klemmrollen- bzw. Hülsenfreilauf. Dazu sind im Griff zumindest eine äussere Hülse, die Klemmrollen sowie eine innere Hülse und/oder ein Käfig für die Klemmrollen angeordnet. Das schnelle Eingreifen wird dadurch erzielt, dass die Klemmrollen zwischen der inneren und der äusseren Hülse in einer Drehrichtung fest geklemmt werden. Die innere Hülsenfläche wird vorzugsweise vom eingesteckten Schraubwerkzeug bereitgestellt. Die für das Festklemmen benötigten Rampen sind vorzugsweise an der äusseren Hülse ausgebildet. Wenn die Freilaufvorrichtung eine geschlossene innere Hülse umfasst, muss zwischen der Inneren Hülse und dem Schraubwerkzeug eine Eingriffsform vorgesehen werden, welche ein Drehen des Schraubwerkzeuges relativ zur inneren Hülse verhindert.

Um die Freilaufrichtung zu wechseln wird vorzugsweise das Schraubwerkzeug aus der Freilaufvorrichtung entnommen und mit umgekehrter Orientierung wieder eingesetzt. Eine Einrasteinrichtung hält das eingesetzte Schraubwerkzeug so am Griff fest, dass es in Richtung seiner Längsachse nicht verschiebbar aber um diese Achse drehbar am Griff sitzt. Die Einrasteinrichtung umfasst beispielsweise ein von einer Feder gegen das Schraubwerkzeug gedrücktes Einrastelement und eine Ringnut im Schraubwerkzeug. Wenn das Schraubwerkzeug an beiden Enden ein Eingriffsteil umfasst, sind die Freilaufrichtungen bei den beiden Enden je unterschiedlich. Bei gleichen Eingriffsteilen an beiden Enden kann mit dem einen Ende ein- und mit dem anderen ausgeschraubt werden. Wenn die Eingriffsteile an den beiden Enden verschieden sind, muss das Schraubwerkzeug jeweils für die gewünscht Freilaufrichtung richtig eingesetzt werden.

Die Teile eines Bearbeitungssets werden optimal auf die jeweiligen Bearbeitungsschritte ausgelegt. Beim Justieren von Bändern wird beispielsweise gemäss der EP 962 616 A1 eine erste Inbusschraube durch eine zweite hindurch betätigt. Daher muss ein Bearbeitungsset mindestens zwei verschiedene Inbusschlüssel umfassen. Bei der erfindungsgemässen Lösung wird dies mit einem Schraubwerkzeug ermöglicht, das die beiden Inbuselemente an den beiden stirnseitigen Enden aufweist. Der Griff mit der Freilaufvorrichtung und das Schraubwerkzeug mit den beiden Eingriffsenden ermöglichen mit lediglich zwei einfach aufgebauten Teilen die Befestigungs- bzw. Einstellschritte in den Profilteilen.

Die Zeichnungen erläutern die Erfindung anhand eines Ausführungsbeispieles. Dabei zeigt
- Fig. 1: eine perspektivische Darstellung eines Rahmens aus Profilteilen mit einer aufgesetzten Bohrlehre
- Fig. 2: eine perspektivische Darstellung eines Profilteiles mit einem eingesetzten verdeckten Band
- Fig. 3: einen Schnitt durch ein Profilteil gemäss Fig. 2,
- Fig. 4: einen Längsschnitt durch eine Bohrlehre,
- Fig. 5: eine Draufsicht auf eine Bohrlehre,
- Fig. 6: eine perspektivische Darstellung einer elliptischen Klemmscheibe,
- Fig. 7: einen Schnitt durch einen Griff mit Freilaufvorrichtung und mit einem eingesetzten Schraubwerkzeug,
- Fig. 8: eine Draufsicht auf einen Griff mit Freilaufvorrichtung und mit einem eingesetzten Schraubwerkzeug, und
- Fig. 9: eine perspektivische Darstellung eines Schraubwerkzeuges mit zwei verschiedenen Inbusschlüsseln.

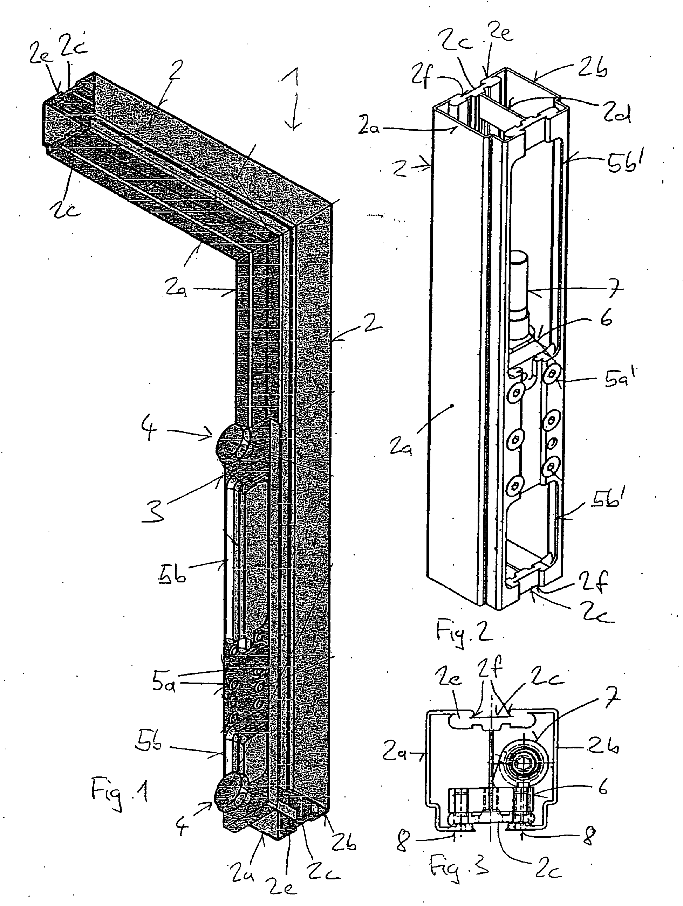

Die Figuren 1 bis 3 zeigen Ausschnitte eines Türrahmens 1, der aus Profilteilen 2 zusammengestellt ist. Die Profilteile 2 umfassen ein metallisches Aussenprofil 2a und ein metallisches Innenprofil 2b. Zwischen diesen beiden metallischen Profilbereichen sind isolierende, stegförmige Verbindungen 2c ausgebildet. Die isolierenden Verbindungen 2c sind aus einem Isolationsmaterial und somit nicht aus Metall gebildet. Die Verbindung zwischen den metallischen Profilen 2a, 2b und den isolierenden Verbindungen 2c erfolgt vorzugsweise über Falzverbindungen 2e. Dabei werden die isolierenden Verbindungen 2c von Verbindungsbereichen der metallischen Profile umgriffen und festgeklemmt. Gegebenenfalls sind die beiden isolierenden Verbindungen 2c über eine Trennfläche 2d miteinander verbunden. Die Trennfläche 2d unterteilt den Innenraum der Profilelemente 2 in zwei Teilräume und erhöht damit die Wärmedämmwirkung.

Beim Anschluss der isolierenden Verbindung 2c an das Innen- und an das Aussenprofil 2b, 2a ergeben sich Eingriffsspalte 2f, in welche Halteteile 4 einer Bohrlehre 3 eingreifen können. Die Bohrlehre 3 umfasst Durchtrittsöffnungen in der Form von Schablonen-Bohrungen 5a und Schablonen-Ausnehmungen 5b. Nach dem Festsetzen der Bohrlehre 3 am richtigen Ort eines Profilteiles 2 können durch die Schablonen-Bohrungen 5a und gegebenenfalls die Schablonen-Ausnehmungen 5b die entsprechenden Profil-Bohrungen 5a' sowie die Profil-Ausnehmungen 5b' in das Profilteil 2 eingebracht werden.

Gemäss Fig. 2 und 3 wird ein Bandteil 6 im Inneren des Profilteiles 2 mittels Schrauben 8 befestigt, wobei die Schrauben 8 von aussen durch die Profil-Bohrungen 5a' in den Befestigungsbereich des Bandteiles 6 geschraubt werden. Am Bandteil 8 ist ein Lagerzapfen 7 verstellbar gelagert. Wenn nun die Verstellbarkeit so ausgebildet ist, dass der Lagerzapfen 7 sowohl in der Höhe als auch exzentrisch verstellbar ist, so muss die Einstellung der Höhe und der Exzentrizität des Lagerzapfens im Innern des Profilteiles 2 durchgeführt werden. Dazu muss ein Schraubwerkzeug durch zumindest eine der beiden Profil-Ausnehmungen 5b' eingeführt und betätigt werden.

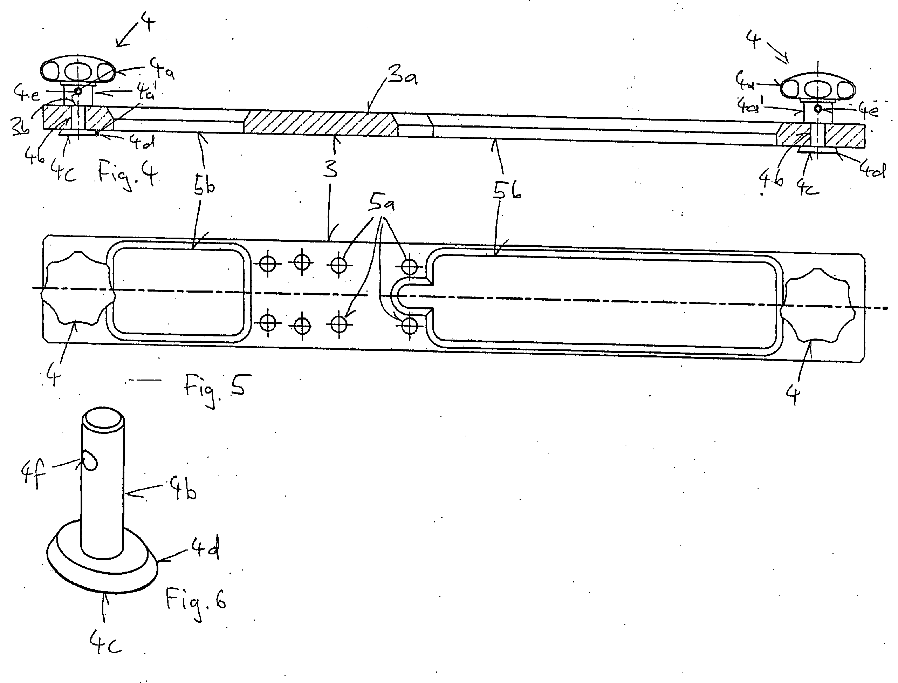

Die Figuren 4 bis 6 zeigen die wesentlichen Merkmale der Schablone 3. Diese umfasst eine Grundplatte 3a mit den Schablonen-Bohrungen 5a und/oder den Schablonen-Ausnehmungen 5b. In der Grundplatte 3a sind zwei Lagerbohrungen 3b für die Halteteile 4 ausgebildet. Ein Halteteil 4 umfasst einen Drehgriff 4a, der mit einer Hülse 4a' über einen von unten durch die Grundplatte gestossenen Bolzen 4b gestülpt wird. Eine Stellschraube 4e wird durch die Hülse 4a' in eine Querbohrung 4f des Bolzens 4b geschraubt, so dass die Hülse 4a' drehfest mit dem Bolzen 4b verbunden ist. An der Unterseite der Grundplatte 3a ist am Bolzen 4b eine Klemmscheibe 4c ausgebildet. Die Klemmscheibe 4c hat eine ellipsenähnlichen, insbesondere aber eine elliptische, Aussenberandung. Der Umfang der Klemmscheibe 4c nimmt gegen die Grundplatte 3a hin ab, so dass an der von der Grundplatte abgewandten Abschlussfläche der Klemmscheiben 4c eine spitzwinklige Kante 4d ausgebildet ist.

Beim Festsetzen der Schablone 3 an einem Profilteil 2 werden die Klemmscheiben 4c in einer ersten Drehausrichtung zwischen den beiden metallischen Profilen 2a, 2b auf die isolierende Verbindung 2c aufgelegt. Durch das Drehen der beiden Drehgriffe 4a gelangen Teilbereiche der spitzwinkligen Kante 4d zwischen die isolierende Verbindung 2c und je ein metallisches Profil 2a, 2b. Wenn die Klemmscheibe 4c und damit auch die Kante 4d bezüglich der Drehachse des Bolzens 4b punktsymmetrisch ausgebildet sind, so ergibt sich ein zentrierender Eingriff der Klemmscheibe am Profilteil 2. Die Klemmlage wird in einer zweiten Drehausrichtung erreicht. Unabhängig vom jeweiligen Abstand zwischen dem Innen- und dem Aussenprofil, der innerhalb einer Toleranz variiert, ist die Achse des Bolzens 4b in der Klemmlage genau zentriert zwischen dem Innen- und dem Aussenprofil 2b, 2a. Weil sich der dünne äussere Randbereich der Klemmscheibe 4c etwas unter den über die isolierende Verbindung 2c vorstehenden Rand des Innen- und des Aussenprofils 2b, 2a schiebt, hält die Klemmscheibe 4c die Bohrlehre 3 bzw. die Grundplatte 3a am Profilteil 2 fest.

Vor dem Festklemmen kann die Bohrlehre 3 entlang des Profilteiles 2 in die gewünschte Lage verschoben werden. Zum einfachen Einstellen der gewünschten Lage können einfache Messhilfen vorgesehen werden. Nach dem Erreichen der gewünschten Lage werden die Klemmscheiben 4c festgeklemmt. In der festgeklemmten Bohrlehre können die gewünschten Profil-Bohrungen 5a' und gegebenenfalls Profil-Ausnehmungen 5b' angebracht werden. Wenn die Profil-Ausnehmungen nicht besonders genau ausgebildet werden müssen, so können sie auch lediglich markiert und nach dem Entfernen der Schablone angebracht werden.

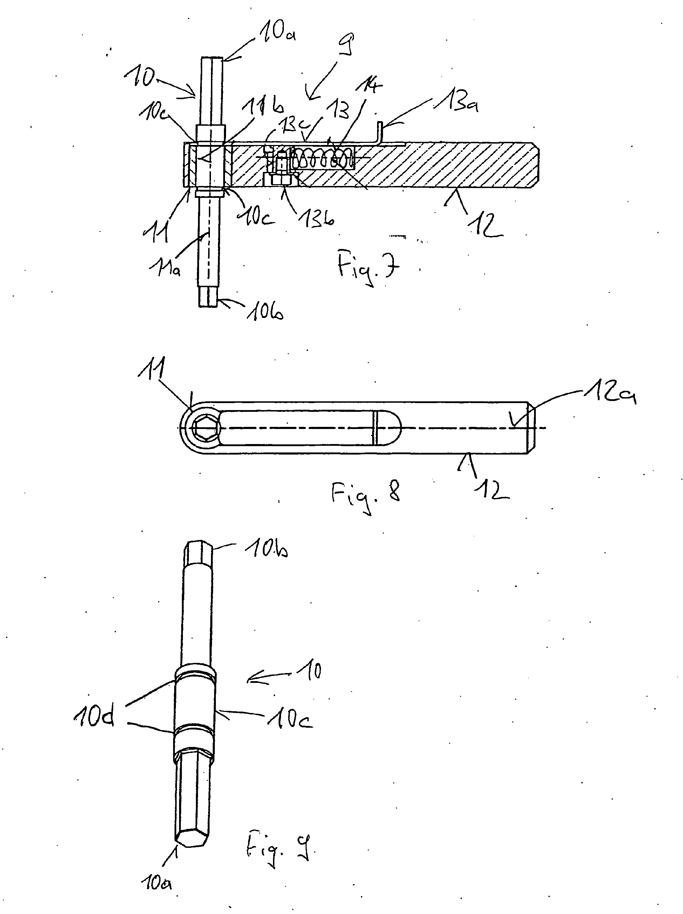

Am Profilteil 2 mit den Profil-Bohrungen 5a' und den Profil-Ausnehmungen 5b' werden Bandteile 6 in den Hohlraum des Profilteiles 2 eingeführt und daran festgeschraubt. Um beispielsweise Bänder gemäss der EP 962 616 A1 zu justieren muss eine erste Inbusschraube durch eine zweite hindurch betätigt werden. Die erfindungsgemässe Schraubvorrichtung 9 umfasst dazu gemäss Fig. 7 und 9 ein Schraubwerkzeug 10, das an beiden Enden Eingriffsteile 10a und 10b mit unterschiedlich grossen Querschnitten aufweist. Es versteht sich von selbst, dass anstelle der sechseckigen Eingriffsteile 10a und 10b auch andere Eingriffsteile und/oder Werkzeuge mit lediglich einem Eingriffsteil vorgesehen werden können. Ein Bereich des Schraubwerkzeuges 10, vorzugsweise ein mittlerer Bereich, weist den grössten Querschnitt auf und ist als Aufnahmebereich 10c zur Aufnahme in eine Freilaufvorrichtung 11 eines Griffes 12 ausgebildet.

Die Drehachse 11 a der Freilaufvorrichtung 11 verläuft im Wesentlichen senkrecht zur Längsachse 12a des Griffes 12. Die Freilaufvorrichtung 11 umfasst eine zentrale Durchtrittsöffnung 11 b zur Aufnahme des Aufnahmebereiches 10c des Schraubwerkzeuges 10. Um das eingesetzte Schraubwerkzeug 10 in der gewünschten Lage in der Freilaufvorrichtung 11 zu halten, ist mindestens eine Nut 10d am Schraubwerkzeug 10 ausgebildet. Ein am Griff 12 geführtes Einrastteil 13 wird von einer im Griff 12 angeordneten Feder 14 in die Nut 10d gedrückt. In der Eingriffslage ist das Schraubwerkzeug 10 um die Drehachse 11a drehbar und in Richtung der Drehachse 11a unverschiebbar am Griff 12 gehalten. Das Einrastteil 13 umfasst einen Greifbereich 13a an dem es aus der Einrastlage gegen die Federkraft zurückgezogen werden kann. Das Einrastteil 13 umfasst zudem eine in den Griff 12 vorstehende Gewindehülse 13c. Von einer in die Gewindehülse 13c eingeschraubten Führungsschraube 13b wird das Einrastteil am Griff 12 verschiebbar gehalten. Vorzugsweise werden zwischen dem Griff und der Gewindehülse 13c und/oder der Führungsschraube 13b zwei Anschläge gebildet, welche die Bewegung des Einrastteiles 13 beschränken.

Die Freilaufvorrichtung 11 ist vorzugsweise ein Klemmrollen- bzw. Hülsenfreilauf. Dazu sind im Griff 12 zumindest eine äussere Hülse, die Klemmrollen sowie ein Käfig für die Klemmrollen angeordnet. Das schnelle Eingreifen wird dadurch erzielt, dass die Klemmrollen zwischen dem Aufnahmebereich 10c des Schraubwerkzeuges 10 und der äusseren Hülse in einer Drehrichtung fest geklemmt werden. In der anderen Drehrichtung ergibt sich ein Freilauf. Die für das Festklemmen benötigten Rampen sind an der äusseren Hülse ausgebildet. Es wären auch Ausführungsformen möglich bei denen die Freilaufvorrichtung 11 eine geschlossene innere Hülse umfasst. Dann muss zwischen der inneren Hülse und dem Schraubwerkzeug 10 eine Eingriffsform vorgesehen werden, welche ein Drehen des Schraubwerkzeuges relativ zur inneren Hülse verhindert.

Der Griff mit der Freilaufvorrichtung und das Schraubwerkzeug mit den beiden Eingriffsenden ermöglichen mit lediglich zwei einfach aufgebauten Teilen die Befestigungs- bzw. Einstellschritte in den Profilteilen. Durch ein einfaches Zurückziehen des Einrastelementes 13 und das Umstecken des Schraubwerkzeuges kann die Freilaufrichtung der Eingriffsteile 10a und 10b gewechselt werden.

## Patentansprüche

1. Bearbeitungsset für Profilsysteme, mit einer Schablone (3), welche eine Grundplatte (3a) mit mindestens einer Durchtrittsöffnung (5a, 5b) sowie eine Befestigungseinrichtung umfasst, **dadurch gekennzeichnet, dass** die Befestigungseinrichtung mindestens zwei Klemmscheiben (4c) mit einer ellipsenähnlichen Aussenberandung umfasst, wobei die Klemmscheiben (4c) von einer Unterseite der Grundplatte (3a) etwas vorstehen und von der Oberseite her um Klemmachsen gedreht werden können.

2. Bearbeitungsset nach Anspruch 1, **dadurch gekennzeichnet, dass** der Umfang der Klemmscheiben (4c) gegen die Grundplatte (3a) hin abnimmt und somit an der von der Grundplatte (3a) abgewandten Abschlussfläche der Klemmscheiben (4c) eine spitzwinklige Kante (4d) ausgebildet ist.

3. Bearbeitungsset nach Anspruch 1 oder 2, **dadurch gekennzeichnet, dass** die Schablone (3) mindestens zwei Durchtrittsöffnungen (5a) umfasst, wobei die Durchtrittsöffnungen (5a) bezüglich einer durch die Klemmachsen führenden Mittellinie symmetrisch angeordnet sind.

4. Bearbeitungsset nach einem der Ansprüche 1 bis 3, **dadurch gekennzeichnet, dass** die Klemmscheiben (4c) mit Drehgriffen (4a) auf der Oberseite der Grundplatte (3a) verbunden sind.

5. Bearbeitungsset nach Anspruch 1, **dadurch gekennzeichnet, dass** das Bearbeitungsset zudem eine Schraubvorrichtung (9) mit einem Griff (12), einer Freilaufvorrichtung (11) und einem Schraubwerkzeug (10) umfasst, wobei die Freilaufvorrichtung (11) am Griff (12) befestigt ist, die Drehachse (11a) der Freilaufvorrichtung (11) im Wesentlichen senkrecht zur Griffachse (12a) verläuft, die Freilaufvorrichtung (11) eine Durchtrittsöffnung (11b) zur Aufnahme eines Schraubwerkzeuges (10) umfasst und die Schraubvorrichtung (9) eine Einrasteinrichtung zum Festhalten des Schraubwerkzeuges (10) in der Freilaufvorrichtung (11) aufweist.

6. Bearbeitungsset nach Anspruch 5, **dadurch gekennzeichnet, dass** die Einrasteinrichtung mindestens eine Nut (10d) am Schraubwerkzeug (10) und ein am Griff (12) geführtes Einrastteil (13) umfasst.

7. Bearbeitungsset nach Anspruch 6, **dadurch gekennzeichnet, dass** die Einrasteinrichtung ein Federelement (14) umfasst, wobei das Federelement (14) das Einrastteil (13) gegen das Schraubwerkzeug (10) presst und am Griff (12) angeordnet ist.

8. Bearbeitungsset nach einem der Ansprüche 5 bis 7, **dadurch gekennzeichnet, dass** das Schraubwerkzeug (10) an beiden Enden Eingriffsteile (10a, 10b) umfasst, welche vorzugsweise verschieden grosse Querschnitte aufweisen.

9. Bearbeitungsset nach einem der Ansprüche 5 bis 8, **dadurch gekennzeichnet, dass** die Freilaufvorrichtung (11) ein Klemmrollen- bzw. Hülsenfreilauf ist und zumindest eine äussere Hülse mit Rampen und einen Käfig mit Klemmrollen umfasst.

## Claims

1. Working kit for systems of profiles, having a template (3) which comprises a base plate (3a) with at least one passage (5a, 5b) and a fixing device, **characterized in that** the fixing device comprises at least two clamping discs (4c) having an ellipse-like outer border, the clamping discs (4c) projecting slightly from an underside of the base plate (3a) and being capable of being rotated about clamping axes from the top.

2. Working kit according to Claim 1, **characterized in that** the circumference of the clamping discs (4c) decreases towards the base plate (3a) and an acute-angled edge (4d) is therefore formed on the end surface of the clamping discs (4c) which faces away from the base plate (3a).

3. Working kit according to Claim 1 or 2, **characterized in that** the template (3) comprises at least two passages (5a), the passages (5a) being arranged symmetrically with respect to a central line passing through the clamping axes.

4. Working kit according to any of Claims 1 to 3, **characterized in that** the clamping discs (4c) are connected to turning grips (4a) on the top of the base plate (3a).

5. Working kit according to Claim 1, **characterized in that** the working kit additionally comprises a screw device (9) having a grip (12), a free-wheeling device (11) and a screw tool (10), the free-wheeling device (11) being fixed to the grip (12), the axis of rotation (11a) of the free-wheeling device (11) being substantially perpendicular to the grip axis (12a), the free-wheeling device (11) comprising a passage (11b) for receiving a screw tool (10), and the screw device (9) having a snap-in device for holding the screw tool (10) in the free-wheeling device (11).

6. Working kit according to Claim 5, **characterized in that** the snap-in device comprises at least one groove (10d) on the screw tool (10) and a snap-in part (13) guided on the grip (12).

7. Working kit according to Claim 6, **characterized in that** the snap-in device comprises a spring element (14), the spring element (14) pressing the snap-in part (13) against the screw tool (10) and being arranged on the grip (12).

8. Working kit according to any of Claims 5 to 7, **characterized in that** the screw tool (10) comprises, at both ends, engagement parts (10a, 10b) which preferably have cross-sections of different sizes.

9. Working kit according to any of Claims 5 to 8, **characterized in that** the free-wheeling device (11) is a pinch roll freewheel or sleeve freewheel and comprises at least one outer sleeve with ramps and a cage with pinch rolls.

## Revendications

1. Kit de travail pour systèmes de profilés, avec un gabarit (3), comprenant une plaque de base (3a) avec au moins une ouverture de passage (5a, 5b) ainsi qu'un dispositif de fixation, **caractérisé en ce que** le dispositif de fixation comprend au moins deux disques de serrage (4c) avec une bordure extérieure analogue à une ellipse, les disques de serrage (4c) faisant saillie quelque peu d'une vase inférieure de la plaque de base (3a) et pouvant être tournées, depuis la face supérieure, autour d'axes de rotation.

2. Kit de travail selon la revendication 1, **caractérisé en ce que** la circonférence des rondelles de serrage (4c) diminue, en évoluant vers la plaque de base (4a) et, ainsi, une arête (4d) acutangulaire est réalisée sur la face de délimitation, opposée à la plaque de base (3a), des disques de serrage (4a).

3. Kit de travail selon la revendication 1 ou 2, **caractérisé en ce que** le gabarit (3) comprend au moins deux ouvertures de passage (5a), les ouvertures de passage (5a) étant disposées symétriquement par rapport à un axe médian passant par les axes de serrage.

4. Kit de travail selon l'une des revendications 1 à 8, **caractérisé en ce que** les disques de serrage (4c) sont reliés à des poignées tournantes (4a), sur la face supérieure de la plaque de base (3a).

5. Kit de travail selon la revendication 1, **caractérisé en ce que** le kit de travail comprend en plus un dispositif de vissage (9) avec une poignée (12), une dispositif à roue libre (11) et un outil de vissage (10), le dispositif à roue libre (11) étant fixé sur la poignée (12), l'axe de rotation (11a) du dispositif à roue libre (11) s'étendant sensiblement perpendiculairement à l'axe de poignée (12a), le dispositif à roue libre (11) comprenant une ouverture de passage (11b) pour recevoir un outil de vissage (10), et le dispositif de vissage (9) présentant un dispositif à encliquetage pour maintenir l'outil de vissage (10) fixé dans le dispositif à roue libre (11).

6. Kit de travail selon la revendication 5, **caractérisé en ce que** le dispositif à encliquetage comprend une gorge (10d) sur l'outil de vissage (10) et une pièce d'encliquetage (13) guidée sur la poignée (12).

7. Kit de travail selon la revendication 5, **caractérisé en ce que** le dispositif à encliquetage comprend un élément à ressort (14), l'élément à ressort (14) pressant la pièce d'encliquetage (13) contre l'outil de vissage (10) et étant disposé sur la poignée (12).

8. Kit de travail selon l'une des revendications 5 à 7, **caractérisé en ce que** l'outil de vissage (10) comprend aux deux extrémités des pièces de mise en prise (10a, 10b), présentant des sections transversales de préférence de grosseur différente.

9. Kit de travail selon l'une des revendications 5 à 8, **caractérisé en ce que** le dispositif à roue libre (11) est une roue libre à galets de serrage et/ou à douille et comprend au moins une douille extérieure portant des rampes et une cage munie de galets de serrage.
